# EUROPÄISCHE PATENTSCHRIFT

(11) **EP 1 761 987 B1**
(45) Veröffentlichungstag und Bekanntmachung des Hinweises auf die Patenterteilung: **14.01.2009**
(21) Anmeldenummer: 05729591.7
(22) Anmeldetag: 24.03.2005
(51) Int. Cl.: H02J 7/00, H02M 3/335

(54) **VORRICHTUNG UND VERFAHREN ZUM LADUNGSAUSGLEICH VON IN REIHE ANGEORDNETEN EINZELNEN ZELLEN EINES ENERGIESPEICHERS**
DEVICE AND METHOD FOR COMPENSATING CHARGES OF SERIALLY MOUNTED INDIVIDUAL CELLS OF AN ENERGY STORE
SYSTEME ET PROCEDE POUR EQUILIBRER LA CHARGE D'ELEMENTS INDIVIDUELS D'UN ACCUMULATEUR D'ENERGIE MONTES EN SERIE

(30) Priorität: 28.06.2004 DE 102004031216
(43) Veröffentlichungstag der Anmeldung: 14.03.2007
(73) Patentinhaber: Continental Automotive GmbH, 30165 Hannover (DE)
(72) Erfinder: BOLZ, Stephan, 93102 Pfatter (DE); GÖTZENBERGER, Martin, 85051 Ingolstadt (DE); KNORR, Rainer, 93055 Regensburg (DE); LUGERT, Günter, 80804 München (DE)
(86) Internationale Anmeldenummer: PCT/EP2005/051386
(87) Internationale Veröffentlichungsnummer: WO 2006/000471

(56) Entgegenhaltungen:
- DE-B3- 10 256 704
- US-A1- 2004 037 100
- KUTKUT N H ET AL: "Dynamic equalization techniques for series battery stacks" TELECOMMUNICATIONS ENERGY CONFERENCE, 1996. INTELEC '96., 18TH INTERNATIONAL BOSTON, MA, USA 6-10 OCT. 1996, NEW YORK, NY, USA,IEEE, US, 6. Oktober 1996 (1996-10-06), Seiten 514-521, XP010204362 ISBN: 0-7803-3507-4

## Beschreibung

Die Erfindung betrifft eine Vorrichtung und ein Verfahren zum Ladungsausgleich von in Reihe angeordneten einzelnen Zellen eines Energiespeichers, insbesondere von in Reihe geschalteten Kondensatoren eines Doppelschichtkondensators, wie sie beispielsweise bei einem Kraftfahrzeug-Bordnetz Verwendung finden.

Doppelschichtkondensatoren haben sich als sinnvollste technische Lösung zur Speicherung und Bereitstellung kurzfristig hoher Leistungen in einem Kraftfahrzeug-Bordnetz erwiesen, beispielsweise bei der Beschleunigungsunterstützung (Boosten) der Brennkraftmaschine durch einen als Elektromotor arbeitenden integrierten Starter-Generator oder bei der Umwandlung von Bewegungsenergie in elektrische Energie durch den als Generator arbeitenden integrierten Starter-Generator beim regenerativen Bremsvorgang (Rekuperation).

Die maximale Spannung einer Einzelzelle eines Doppelschichtkondensators ist auf etwa 2,5V bis 3,0V begrenzt, so dass für eine Spannung von beispielsweise 60V - ein typischer Spannungswert für einen in einem 42V-Bordnetz verwendeten Doppelschichtkondensator - etwa 20 bis 26 Einzelkondensatoren zu einem Kondensatorstapel in Reihe geschaltet werden müssen.

Bedingt durch unterschiedliche Selbstentladung der Einzelzellen baut sich im Lauf der Zeit ein Ladungsungleichgewicht im Kondensatorstapel auf, welches den Doppelschichtkondensator letztendlich unbrauchbar macht, wenn kein Ladungsausgleich vorgenommen wird.

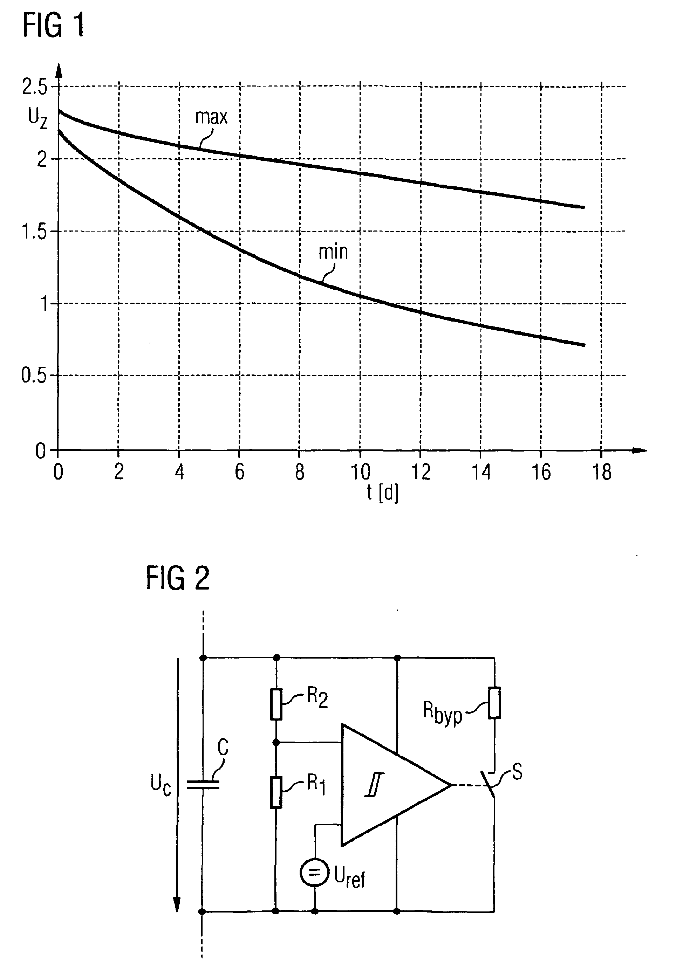

Extrapoliert man die Entladekurve auf Zeiträume von Wochen bis Monate, die beim Kraftfahrzeug relevant sind, so wird das bestehende Problem offensichtlich. Figur 1 zeigt beispielhaft den Streubereich der Kondensatorspannungen für einen Doppelschichtkondensator (Kondensatorstapel) mit 18 Zellen (Kondensatoren) über der Zeit. Die in Figur 1 dargestellte Streubreite (zwischen Maximum und Minimum) zeigt, wie weit die Selbstentladung der Einzelzellen innerhalb eines Kondensatorstapels mit der Zeit schwanken kann.

Ein einfacher Ladungsausgleich, beispielsweise durch geringes Überladen des Kondensatorstapels, wie bei einem Blei-Säure-Akkumulator, ist bei einem Doppelschichtkondensator jedoch nicht möglich.

Eine firmenintern bekannte Möglichkeit besteht darin, die Spannung jeder Einzelzelle mittels separater Elektronik (Operationsverstärker und Spannungsteiler R1/R2) zu überwachen und bei Erreichen oder Überschreiten eines vorgegebenen Maximalwertes U_{ref} eine Teilentladung mittels eines anschaltbaren Parallelwiderstandes R_{byp} herbeizuführen (Figur 2). Die Zelle entlädt sich dann über den Parallelwiderstand R_{byp} und ihre Spannung U_{C} sinkt wieder unter den Maximalwert. Wird der Maximalwert um einen vorbestimmten Spannungswert unterschritten, so wird der Parallelwiderstand R_{byp} wieder abgeschaltet.

Solch eine Schaltung verbraucht im passiven Zustand wenig Energie, jedoch wird der Ladungsausgleich durch Ladungsabbau (Energieverlust im Parallelwiderstand R_{byp}) erzielt. Diese Variante ist sinnvoll dort einzusetzen, wo ein Kondensatorstapel überwiegend nahe der Maximalspannung betrieben wird, etwa bei der Versorgung von Notstromanlagen.

Das Konzept ist jedoch darauf beschränkt, dass der Ladestrom in den Kondensatorstapel hinein kleiner sein muss als der Entladestrom der Ladungsausgleichschaltung, da sonst trotzdem eine Überladung von einzelnen Kondensatoren beim Aufladen des Moduls nicht zu verhindern ist. Zudem kann das Ausgleichsystem nicht von extern eingeschaltet werden, sondern nur durch Überschreiten der vorbestimmten Spannungsschwelle aktiviert werden. Bei dem Betrieb in einem Kraftfahrzeug wird jedoch genau dieser Zustand nicht über eine längere Zeit erreicht. Ein so gestalteter Ladungsausgleich führt langfristig zu einer Unsymmetrie im Kondensatorstapel. Dies konnte bereits durch Messungen in einem Versuchsfahrzeug nachgewiesen werden.

Zusammengefasst hat eine solche Schaltungsanordnung folgende Nachteile:
- keine Rückmeldung an eine übergeordnete Betriebsführung, wenn eine Zelle die maximale Spannung überschritten hat (beispielsweise U_{C}>2,5V),
- keine Rückmeldung, ob die Zellenspannungen gleich groß sind und daher der Kondensatorstapel ausgeglichen ist,
- der Ausgleich wird nur aktiviert, wenn die maximale Spannung überschritten wird,
- Energie wird während des Ausgleichsvorganges von Widerständen in Wärme umgewandelt,
- bei hohen Strömen von bis zu ca. 1kA, wie sie bei der oben beschriebenen Fahrzeugfunktionen Rekuperation (Regeneratives Bremsen) auftreten, ist ein derartig aufgebauter Ladungsausgleich ausgeschlossen.

Aus EP 0 432 639 B2 ist bekannt, bei einer Vielzahl von in Reihe geschalteten Akkumulatoren einen Ladungsausgleich zwischen einem schwach geladenen Akkumulator und der Gruppe der übrigen Akkumulatoren herbeizuführen, indem für jeden Einzelakkumulator des Akkumulatorstapels eine Vergleichsschaltung und eine Ladeschaltung (welche einen Rechteck-Funktionsgenerator aufweist) sowie eine Diode, ein Transformator und ein Unterbrecher vorgesehen sind.

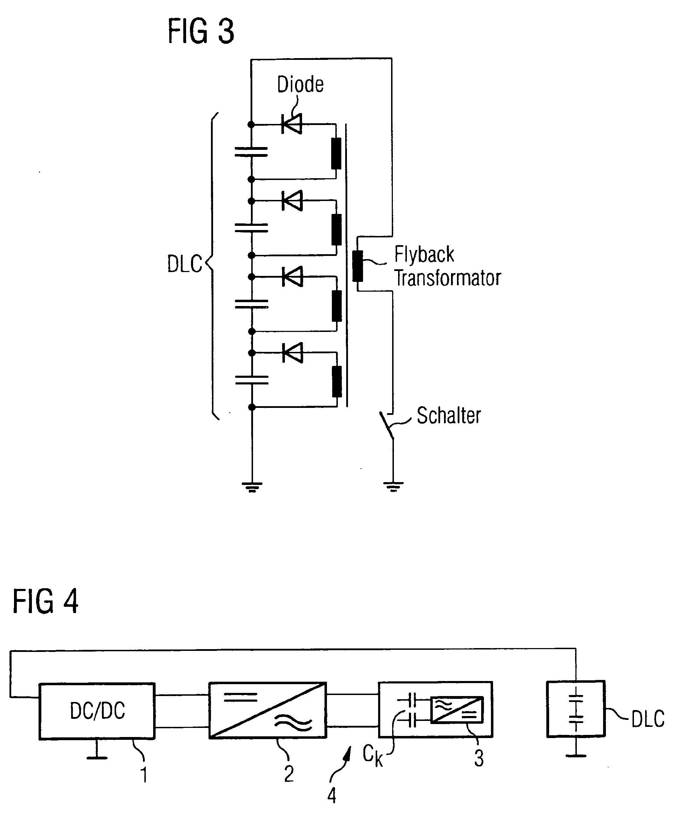

Mittels einer solchen, als Flyback-Konverter nach dem Sperrwandlerprinzip arbeitenden vorrichtung (Figur 3) wird dem gesamten Stapel Energie entnommen und diese anschließend in den am meisten entladenen Akkumulator zurückgespeist.

Dieser Aufwand mag für zwei oder drei Akkumulatoren gerechtfertigt sein, für einen Stapel aus zwanzig oder mehr Akkumulatoren/Kondensatorzellen ist er entschieden zu hoch.

Alternativ kann hier auch eine andere Energiequelle - etwa eine zusätzliche Batterie - genutzt werden, wodurch die Schaltung zusätzlich zum langsamen Aufladen des Kondensatorstapels dienen kann - siehe auch DE 102 56 704 B3.

Diese Form des Ladungsausgleichs kann zudem unabhängig vom Erreichen einer maximalen Spannung des Einzelkondensators jederzeit durchgeführt werden, so dass sich ein gefährliches Ladungsungleichgewicht im Kondensatorstapel gar nicht erst aufbauen kann.

Es werden dabei nur Ladungen verschoben. Es wird dem Stapel langfristig keine Energie entnommen oder in wärme umgesetzt. Dies macht das Konzept für Kraftfahrzeug-Anwendungen besonders attraktiv, da auch nach längerem Fahrzeugstillstand genügend Energie im Bordnetz vorhanden sein muss, um einen erfolgreichen Motorstart sicher zu gewährleisten.

Nachteilig bei dieser Ausführung ist allerdings, dass die Sekundärseite des Flyback-Transformators sehr viele Anschlüsse benötigt. Bei einem Kondensatorstapel mit beispielsweise 25 Einzelzellen, wie er für das 42V-Bordnetz benötigt wird, ergeben sich daraus 50 Anschlüsse. In der technischen Realisierung würde dies einen speziellen Wickelkörper erforderlich machen, der handelsüblich nicht verfügbar ist. Zudem bedarf jede Änderung der Zellenzahl im Stapel einer Anpassung des Transformators. Dies ist aber zu erwarten, da mit der technischen Weiterentwicklung des Doppelschichtkondensators die zulässige Maximalspannung von Generation zu Generation steigt und bei gegebener Modulspannung entsprechend weniger Einzelkondensatoren benötigt werden.

Auch ist die Leitungsführung vom Transformator zu den Kondensatorzellen aufwendig, da jeder Kontakt im Stapel separat verbunden werden muss. Im obigen Beispiel ergibt dies 26 Leitungen, sofern die Gleichrichterdioden am Transformator angeordnet sind; andernfalls sind es 50 Leitungen. Darüber hinaus sind diese Leitungen mit hochfrequenten Spannungspulsen aus den Schaltvorgängen des Flyback-Converters belastet und benötigen gesonderte EMV-Entstörmaßnahmen.

Ein weiterer Aspekt ist die Methode zum Betrieb des Flyback-Konverters. Marktübliche Ansteuerschaltungen (Schaltregler-ICs) arbeiten fast ausschließlich mit einer festen Schaltfrequenz. Die Aufladung des Magnetspeichers (Speicherinduktivität oder -transformator) erfolgt in der einen Phase, die Entladung, bzw. Energieübertragung in den Ausgangskreis erfolgt in der anderen Phase des Taktes. Dies ist vor allem sinnvoll, wenn neben dem geschalteten Strom auch ein Gleichstromanteil mit übertragen wird (nichtlückender Betrieb). Ganz generell versucht man, eine Schaltlücke - also den Zeitraum, in welchem das magnetische Speicherelement völlig entladen bleibt - zu vermeiden, da dann verstärkt Oszillationsneigungen auftreten und die Speichereigenschaften des Magnetkernes nicht optimal genutzt werden. Die Oszillationen sind in dem Resonanzkreis begründet, der aus Speicherinduktivität und Wicklungskapazität besteht, sowie der Tatsache, dass der Resonanzkreis anfangs der Schaltlücke angeregt ist und durch keine ohmsche Last bedämpft wird.

Im vorliegenden Anwendungsfall ist ein nichtlückender Betrieb jedoch nicht möglich, da bei kontinuierlichem Nachladen des Magnetspeichers jeweils vor dessen vollständiger Entladung eine Sättigung des Kernmaterials nicht zu vermeiden ist.

Es ist Aufgabe der Erfindung, eine Vorrichtung mit einem vereinfachten Aufbau zu schaffen, mittels welcher ein selbstgesteuerter Betrieb zum Ladungsausgleich zwischen den einzelnen in Serie geschalteten Zellen mit geringem technischem Aufwand erreicht werden kann.

Aufgabe der Erfindung ist es auch, ein Verfahren zum Betreiben dieser Vorrichtung zu schaffen.

Diese Aufgabe wird erfindungsgemäß durch eine Vorrichtung gemäß den Merkmalen von Anspruch 1 und ein Verfahren zum Betreiben dieser Vorrichtung gemäß den Merkmalen von Anspruch 11 gelöst.

Bei zumindest zwei in Reihe geschalteten Energiespeichern (Zellen) wird die zum Ausgleich der gespeicherten Ladungen benötigte Energie über einen Wechselspannungsbus (AC-Bus) jeweils der Zelle, an der die geringste Zellenspannung abfällt, zugeführt.

Vorteilhafte Weiterbildungen der Erfindung sind den Unteransprüchen zu entnehmen.

Die Anbindung und Potentialtrennung der Zellen erfolgt erfindungsgemäß über Kondensatoren.

Die Installation ist durch das Bussystem einfach durchführbar. Die einzelnen Zellen werden über eine oder zwei AC-Busleitungen versorgt. Es werden für die Schaltung nur wenige und preiswerte Komponenten benötigt. Bei diesen handelt es sich im Wesentlichen um Standardkomponenten.

Der Ausgleichsvorgang kann jederzeit aktiviert werden. Diese Aktivierung kann beispielsweise durch ein Steuergerät erfolgen, das den Aktivierungszeitpunkt aufgrund von Betriebsparametern eines Kraftfahrzeugs, insbesondere einer Brennkraftmaschine und/oder eines Starter-Generators, bestimmt.

Über die Ausgleichsschaltung kann ein Nachladen des Kondensatorstapels erfolgen. Auf diese Weise kann eine Serienschaltung leerer Zellen aus einer weiteren Energiequelle wieder aufgeladen werden und so beispielsweise ein Kraftfahrzeug, das längere Zeit stillstand, wieder startfähig gemacht werden.

Das Gesamtsystem ist einfach zu erweitern und dadurch leicht skalierbar.

Die Schaltungsanordnung eignet sich in besonderer weise für eine Integration in den Stapel von in Reihe geschalteten Zellen eines Energiespeichers und/oder in das Gehäuse der einzelnen Zellen oder des gesamten Energiespeichers.

Als Energiespeicher eignen sich hier insbesondere Doppelschichtkondensatoren, auch Super- oder Ultra-Caps genannt.

Ausführungsbeispiele nach der Erfindung werden nachstehend anhand einer schematischen Zeichnung näher erläutert. In der Zeichnung zeigen:
- Figur 1: die Streuung der Kondensatorspannungen verschiedener Zellen eines Doppelschichtkondensators über der Zeit,
- Figur 2: eine bekannte Schaltungsanordnung zum Erzielen eines Ladungsausgleichs bei Energiespeichern,
- Figur 3: eine weitere bekannte Schaltungsanordnung zum Erzielen eines Ladungsausgleichs bei Energiespeichern,
- Figur 4: ein Blockschaltbild einer erfindungsgemäßen Ladungsausgleichsschaltung,
- Figur 5: ein Ausführungsbeispiel einer Ladungsausgleichsschaltung, und
- Figur 6: ein weiteres Ausführungsbeispiel einer Ladungsausgleichsschaltung.

Die Figuren 1 bis 3 sind bereits weiter oben erläutert worden.

Ein Blockschaltbild einer prinzipiellen Schaltung zum Ladungsausgleich von Zellen eines Energiespeichers nach der Erfindung ist in Figur 4 dargestellt. Durch einen ersten Wandler 1 wird eine Gleichspannung erzeugt. Diese Gleichspannung wird über einen zweiten Wandler 2 mit einer Pulsfrequenz von beispielsweise 50kHz wechselgerichtet und mit dieser Wechselspannung ein AC-Bus 4 beaufschlagt. Als Bus wird hier ein System von Leitern (Kabeln, Kupferschienen, etc.) bezeichnet.

An diesen Bus 4 sind über jeweils einen Koppelkondensator und einen Gleichrichter 3 die in Reihe geschalteten Zellen Z₁ bis Zₙ des Doppelschichtkondensators DLC angeschlossen. Die Koppelkondensatoren C_{K} werden zur Potentialtrennung eingesetzt und durch die Wechselspannung teilweise umgeladen.

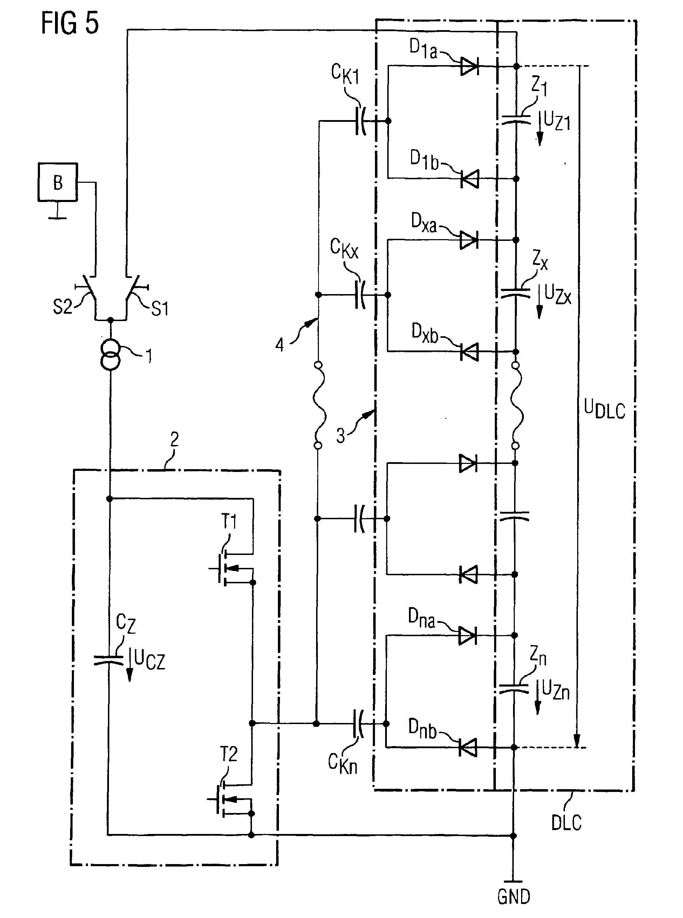

Figur 5 zeigt ein erstes Ausführungsbeispiel einer erfindungsgemäßen Schaltungsanordnung zum Ladungsausgleich von Zellen Z₁ bis Zₙ eines Doppelschichtkondensators DLC. Die über der Reihenschaltung der einzelnen Zellen Z₁ bis Zₙ des Doppelschichtkondensators DLC abfallende Spannung U_{DLC} wird einem DC/DC-Spannungswandler 1 - beispielsweise einem stromgeregelten Tiefsetzsteller - über einen ersten Schalter S1 zugeführt. Über einen zweiten Schalter S2 kann zusätzlich oder alternativ eine Energiequelle, beispielsweise ein Akkumulator B, mit dem DC/DC-Spannungswandler 1 verbunden werden.

Der DC/DC-Spannungswandler 1 ist wiederum mit einem Eingang eines DC/AC-Spannungswandlers 2 elektrisch verbunden, welcher in diesem Ausführungsbeispiel einen Zwischenkreiskondensator C_{Z} und zwei als Halbbrücke geschaltete Transistoren T1 und T2 aufweist. Der Zwischenkreiskondensator C_{Z} kann entweder vom Doppelschichtkondensator DLC über Schalter S1 oder von dem Akkumulator B über Schalter S2 aufgeladen werden. Der zwischen den beiden Transistoren T1 und T2 liegende Ausgang dieses DC/AC-Spannungswandlers 2 ist mit einem AC-Bus 4 verbunden, der wiederum jeweils einen Koppelkondensator C_{K1} bis C_{Kn} für die ihm zugeordnete Zelle Z₁ bis Zₙ aufweist.

Zwischen jedem Koppelkondensator C_{Kx} (x = 1...n) und der ihm zugeordneten Zelle Zₓ ist ein Gleichrichter 3, hier bestehend aus jeweils zwei Dioden Dₓₐ, D_{xb} angeordnet. Die Dioden - Dₓₐ - verbinden jeweils den dem AC-Bus 4 abgewandeten Anschluss des Koppelkondensators C_{Kx} mit dem das höhere Potential aufweisenden Anschluss (künftig "positiver Anschluss" genannt)der zugeordneten Zelle Zₓ, und die Dioden D_{xb} verbinden diesen Anschluss mit dem das niedrigere Potential aufweisenden Anschluss (künftig "negativer Anschluss" genannt) dieser zugeordneten Zelle Zₓ.

Hierbei ist die Diode Dₓₐ vom Koppelkondensator C_{Kx} zum positiven Anschluss der Zelle Zₓ hin in Durchflussrichtung gepolt, während die Diode D_{xb} vom negativen Anschluss der Zelle Zₓ zum Koppelkondensator C_{Kx} hin in Durchflussrichtung gepolt ist.

Der in diesem Ausführungsbeispiel aus einer Halbbrücke T1, T2 bestehende DC/AC-Spannungswandler 2 liefert an seinem zwischen den beiden Transistoren T1 und T2 liegenden Ausgang eine rechteckförmige Wechselspannung, die durch die Koppelkondensatoren C_{K1} bis C_{Kn} zu den einzelnen Zellen Z₁ bis Zₙ übertragen werden kann.

Für die Koppelkondensatoren können verschiedene Kondensatortypen Verwendung finden. Allerdings müssen Kapazität, Frequenz und der innere Verlustwiderstand des Kondensators miteinander abgestimmt werden. Eine Fehlabstimmung würde zu einer zu großen Umladung der Koppelkondensatoren führen und somit die Selektivität und Trennschärfe der Ausgleichsschaltung nachhaltig verschlechtern.

Über den anschließenden Gleichrichter 3 (Dioden D₁ₐ, D_{1b} bis Dₙₐ, D_{nb}) wird der Strom wieder gleichgerichtet und den Zellen Z₁ bis Zₙ als Ladestrom zugeführt.

Um einen Ladungsausgleich an den in Reihe geschalteten Kondensatorzellen Z₁ bis Zₙ eines Doppelschichtkondensators DLC erreichen zu können, muss denjenigen Zellen Z₁ bis Zₙ, welche die höchste Spannung aufweisen, Energie entnommen und den Zellen, an denen die geringste Spannung anliegt, wieder so zugeführt werden, dass diese Zellen geladen werden.

Die Schaltung lässt sich in drei Teilschaltungen aufteilen. Der erste Teil ist eine Stromquelle, die vorteilhaft als DC/DC-Schaltregler 1 ausgeführt ist. Energie kommt - bei einem Ladungsausgleich - aus dem Doppelschichtkondensator DLC selbst oder - bei einem Ladevorgang - aus einer zweiten Energiequelle, wie z.B. einem Akkumulator B. Diese Energie wird einem Zwischenkreiskondensator C_{Z} der zweiten Teilschaltung zugeführt. Für den DC/DC-Schaltregler 1 kommen alle bekannten Varianten in Frage; vorteilhaft ist eine Ausführung als Abwärtsschaltregler, bestehend aus Transistor, Drossel und Freilaufdiode (nicht dargestellt).

Die zweite Teilschaltung 2 weist neben dem Zwischenkreiskondensator C_{Z} eine Brückenschaltung auf, hier eine Halbbrücke, bestehend aus den beiden Transistoren T1 und T2, die aus dem Zwischenkreiskondensator C_{K} gespeist wird, und dessen Ausgang über den AC-Bus 4 an alle Koppelkondensatoren C_{K1} bis C_{Kn} geführt wird. Sie erzeugt eine Wechselspannung, bezogen auf Bezugspotential GND (Masse).

Die dritte Teilschaltung, der Gleichrichter 3, ist je Zelle Z₁ bis Zₙ einmal vorhanden. Er wandelt den Wechselstrom in einen durch die Zellen fließenden pulsierenden Gleichstrom um.

Der Vorgang des Ladungsausgleichs wird beispielhaft für eine Zelle Zx erklärt (mit x = 1 bis n), welche in diesem Ausführungsbeispiel die niedrigste Zellenspannung U_{Zx} aufweisen soll.

Der Koppelkondensator C_{Kx} wird in der negativen Phase des Wechselspannungssignals (Transistor T2 stromleitend) durch die untere Diode D_{xb} auf das untere Potenzial (am negativen Anschluss der Zelle) der Zelle Zₓ - abzüglich der Durchlaßspannung der Diode D_{xb} - geladen.

Wenn das Wechselspannungssignal das Potenzial anschließend ausreichend weit anhebt (Transistor T1 stromleitend), fließt Strom vom Zwischenkreiskondensator C_{Z} über Transistor T1, den AC-Bus 4, den Koppelkondensator C_{Kx} und die Diode Dₓₐ durch die Zelle Zₓ und durch alle Zellen, deren positiver Anschluss ein gegen Bezugspotential GND geringeres Potential als der positive Anschluss der zu ladenden Zelle Zₓ aufweisen, hier also die Zellen Zₓ₊₁ bis Zₙ, und von dort zurück zum Zwischenkreiskondensator C_{Z}.

In der folgenden negativen Phase des Wechselspannungssignals (Transistor T2 wieder stromleitend) fließt der Strom in umgekehrter Richtung durch die Zellen, deren positiver Anschluss ein gegen Bezugspotential GND geringeres Potential als der positive Anschluss der zu ladenden Zelle Zₓ aufweisen, also die Zellen Zₙ bis Zₓ₊₁, und jetzt durch Diode D_{xb} und den Koppelkondensator C_{Kx}. Der Stromkreis schließt sich über den AC-Bus 4 und den stromleitenden Transistor T2.

Es stellt sich also in der Zelle Zₓ ein pulsierender Ladegleichstrom ein, während alle Zellen Zₓ₊₁ bis Zₙ, deren positiver Anschluss ein geringeres Potential gegen Bezugspotential GND aufweisen, einen Wechselstrom erfahren.

Der pulsierende Gleichstrom kann nur in die Zelle Zₓ mit der geringsten Zellenspannung U_{Zx} fließen und lädt dann diese Zelle als erste so lange auf, bis diese die nächsthöhere Zellenspannung einer weiteren Zelle erreicht hat. Der pulsierende Gleichstrom teilt sich dann auf diese beiden Zellen auf, bis diese die Zelle mit der dann nächst höheren Zellenspannung erreicht hat, u.s.w.. Auf diese Weise wird ein Ladungsausgleich des gesamten Kondensatorstapels, d.h., aller Zellen des Doppelschichtkondensators DLC, erreicht.

Die Energie, mit welcher die jeweilige Zelle Zₓ des Doppelschichtkondensators DLC geladen wird, kommt aus dem Zwischenkreiskondensator C_{Z}, der sich durch diese Belastung einerseits und die konstante Nachladung andererseits auf eine geeignete Spannung U_{CZ} selbständig einstellt. Dabei ergibt sich auch automatisch, dass die Zelle, an der die geringste Spannung abfällt, die meiste Energie bekommt, während Zellen (hier Z₁ bis Zₓ₋₁ und Zₓ₊₁ bis Zₙ), an denen momentan eine höhere Zellenspannung abfällt, gar keine Energie bekommen.

Dabei stellen sich hochkapazitive Koppelkondensatoren hoher Güte und Dioden mit geringen Durchlassspannungen als besonders geeignet dar.

Die erfindungsgemäße Schaltung weist die folgenden Funktionsgruppen auf:
- einen stromgeregelten Tiefsetzsteller 1, der die H-Brücke 2 speist,
- eine selbstgetaktete H-Brücke 2,
- einen AC-Bus 4, an dem die einzelnen Zellen zur Auskopplung der Energie angeschlossen sind,
- Koppelkondensatoren C_{K1} bis C_{Kn} zur Potentialtrennung und Energieübertragung, und
- einen Gleichrichter 3 mit Dioden D₁ₐ, D_{1b} bis Dₙₐ, D_{nb} zur Gleichrichtung des Wechselstromes, der die Zelle, die jeweils die geringste Spannung aufweist, lädt.

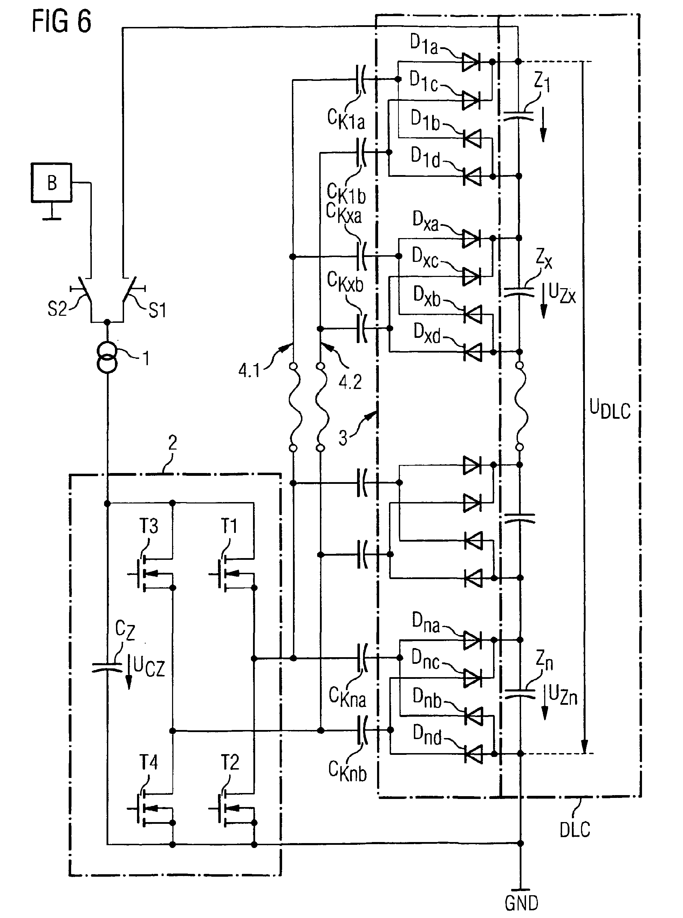

Figur 6 zeigt ein weiteres Ausführungsbeispiel der erfindungsgemäßen Schaltungsanordnung mit einer Vollbrücke und einem (Graetz-)Gleichrichter in einer Zweiphasen-Variante. Auch hier sei die Zelle Zₓ diejenige mit der niedrigsten Zellenspannung U_{Zx}.

Funktionsidentische Teile tragen hier die gleichen Bezugszeichen wie in Figur 5.

Die Schaltung des Ausführungsbeispiels mit zwei Phasen arbeitet ähnlich wie die Schaltung des zuvor beschriebenen und in Figur 5 dargestellten Ausführungsbeispiels mit einer Halbbrücke und einer Phase. Es ergeben sich hier aber gewisse Vorteile, die dem Mehraufwand gegengerechnet werden müssen.

Das Ausführungsbeispiel nach Figur 6 weist als DC/AC-Spannungswandler 2 eine Vollbrückenschaltung mit zwei Halbbrücken auf, bestehend aus erstem und zweitem Transistor T1-T2 bzw. drittem und viertem Transistor T3-T4, die mit je einer BusLeitung 4.1, 4.2 verbunden sind. Jede Busleitung wird über die ihr zugeordnete Halbbrücke mit Energie versorgt.

Die Busleitung 4.1 ist über jeweils einen Koppelkondensator C_{K1a} bis C_{Kna}, und eine Gleichrichterschaltung aus jeweils zwei Dioden D₁ₐ, D_{1b} bis Dₙₐ, D_{nb} mit den in Reihe geschalteten Zellen Z₁ bis Zₙ verbunden.

Die Busleitung 4.2 ist über jeweils einen Koppelkondensator C_{K1b} bis C_{Knb} und eine Gleichrichterschaltung 3 aus jeweils zwei Dioden D_{1c}, D_{1d} bis D_{nc}, D_{nd} mit den in Reihe geschalteten Zellen Z₁ bis Zₙ verbunden.

Beispielhaft für die Zelle Zₓ bedeutet dies: die mit der Halbbrücke T1-T2 verbundene Busleitung 4.1 ist über den Koppelkondensator C_{Kxa} einerseits über die zur Zelle hin stromleitende Diode Dₓₐ mit dem positiven Anschluss der Zelle Zₓ verbunden und andererseits über die zum Koppelkondensator hin stromleitende Diode D_{xb} mit dem negativen Anschluss der Zelle Zₓ verbunden.

Zusätzlich ist die mit der Halbbrücke T3-T4 verbundene Busleitung 4.2 über den Koppelkondensator C_{Kxb} einerseits über die zur Zelle hin stromleitende Diode D_{xc} mit dem positiven Anschluss der Zelle Zₓ verbunden und andererseits über die zum Koppelkondensator hin stromleitende Diode D_{xd} mit dem negativen Anschluss der Zelle Zₓ verbunden.

Die beiden Gleichrichter Dₓₐ, D_{xb} und D_{xc}, D_{xd} arbeiten also parallel auf die Zelle Zₓ. Ebenso sieht die Schaltung für alle anderen Zellen Z₁ bis Zₓ₋₁ und Zₓ₊₁ bis Zₙ aus.

Wesentlicher Vorteil bei zwei Phasen ist hierbei, dass der Wechselstrom durch die eigentlich unbeteiligten Zellen, die momentan nicht geladen werden, also alle Zellen, deren positiver Anschluss ein gegen Bezugspotential GND geringeres Potential, aber höhere Zellenspannungen U_{Z} als die Zelle Zₓ aufweisen (hier also durch die Zellen Zₓ₊₁ bis Zₙ), entfällt.

In diesem Ausführungsbeispiel arbeiten die beiden Halbbrücken gegenphasig, d.h., wenn die Transistoren T1 und T4 in der ersten Phase stromleitend sind, sind die Transistoren T2 und T3 nichtleitend; in der zweiten Phase ist es umgekehrt: hier sind die Transistoren T2 und T3 stromleitend, während die Transistoren T1 und T4 nichtleitend sind.

In der ersten Phase fließt ein Strom vom Zwischenkreiskondensator C_{Z} über Transistor T1 in den Bus 4.1, über Koppelkondensator C_{Kxa} und Diode Dₓₐ durch die Zelle Zₓ und zurück über Diode D_{xd}, Koppelkondensator C_{Kxb}, den Bus 4.2 und Transistor T4 zum Zwischenkreiskondensator CZ.

In der zweiten Phase fließt ein Strom vom Zwischenkreiskondensator C_{Z} über Transistor T3 in den Bus 4.2, über Koppelkondensator C_{Kxb} und Diode D_{xc} durch die Zelle Zₓ und zurück über Diode D_{xb}, Koppelkondensator C_{Kxa}, den Bus 4.1 und Transistor T₂ zum Zwischenkreiskondensator C_{Z}.

Es kompensieren sich der Nachladestrom des einen Koppelkondensators C_{Kxa} und der Entladestrom des anderen Koppelkondensators C_{Kxb}.

Durch den Tiefsetzsteller 1 wird die Energie dem gesamten aus den in Reihe geschalteten einzelnen Zellen Z bestehenden Kondensatorstapel, also dem Doppelschichtkondensator DLC, entnommen. Wahlweise kann dem System über einen zusätzlichen Schalter S2 Energie zugeführt werden.

Die Spannung am jeweiligen AC-Bus steigt soweit, bis sie der niedrigsten Zellenspannung plus einer (Ausführungsbeispiel nach Figur 5) bzw. plus zwei Diodenspannungen (Ausführungsbeispiel nach Figur 6) entspricht. Dadurch wird eine sehr effiziente Nachladung der am stärksten entladenen Zelle erreicht.

Die Gesamtschalung benötigt keine komplexen, teuren Einzelbauteile.

Durch die Struktur des AC-Busses 4 bzw. 4.1 und 4.2 ist das System leicht erweiterbar. Zusätzliche Energiespeicher Zₙ₊₁ können einfach an den Bus angeschlossen oder überflüssige entfernt werden.

Die Ladungsausgleichschaltung kann auch zum Ladungsausgleich von anderen Energiespeichern, beispielsweise von in Reihe geschalteten Akkumulatoren, verwendet werden.

Diese Schaltungsanordnungen (DLC, Gleichrichterdioden, Koppelkondensatoren und Busleitung/en können sowohl in Gehäuse integriert werden, welche die einzelnen Zellen umgeben, oder in ein gemeinsames Gehäuse. Auf diese Weise kann eine kompakte Einheit aufgebaut werden, die lediglich drei oder vier Anschlüsse aufweist.

## Patentansprüche

1. Vorrichtung zum Ladungsausgleich von in Reihe angeordneten einzelnen Zellen (Z₁ bis Zₙ) eines Energiespeichers (DLC),
**dadurch gekennzeichnet,**
**dass** ein DC/DC-Wandler (1) vorgesehen ist, welcher über einen ersten Schalter (S1) mit dem einen Anschluss des Energiespeichers (DLC) verbunden ist,
**dass** ein dem DC/DC-Wandler (1) nachgeschalteter DC/AC-Wandler (2) vorgesehen ist, welcher einen Zwischenkreiskondensator (C_{Z}) und eine Brückenschaltung (T1 bis T4) enthält,
**dass** wenigstens ein dem DC/AC-wandler (2) nachgeschalteter AC-Bus (4, 4.1, 4.2) vorgesehen ist, und
**dass** zwischen jeder Zelle (Z₁ bis Zₙ) und jedem AC-Bus (4, 4.1, 4.2) eine Reihenschaltung wenigstens eines Koppelkondensators (C_{K1} bis C_{Kn}, C_{K1a} und C_{K1b} bis C_{Kna} und C_{Knb}) und eines Gleichrichters (3) angeordnet ist.

2. Vorrichtung nach Anspruch 1, **dadurch gekennzeichnet, dass** der Gleichrichter (3) so ausgebildet ist, dass eine Diode (Dₓₐ, D_{xc}) von dem vom AC-Bus (4, 4.1, 4.2) abgewandten Anschluss des Koppelkondensators (C_{Kx}, C_{Kxa}, C_{Kxb}, wobei x = 1 bis n) zum positiven Anschluss der zugeordneten Zelle (Zₓ) hin stromleitend ist, und die andere Diode (D_{xb}, D_{xd}) vom negativen Anschluss der Zelle (Zₓ) zu dem vom AC-Bus (4, 4.1, 4.2) abgewandten Anschluss des zugeordneten Koppelkondensators (C_{Kx}, C_{Kxa}, C_{Kxb}) hin stromleitend ist.

3. Vorrichtung nach Anspruch 1, **dadurch gekennzeichnet, dass** der DC/DC-Wandler (1) über einen zweiten Schalter (S2) mit einer weiteren Energiequelle (B) verbindbar ist.

4. Vorrichtung nach Anspruch 1, **dadurch gekennzeichnet, dass** der DC/DC-Wandler (1) ein stromgeregelter Tiefsetzsteller ist.

5. Vorrichtung nach Anspruch 1, **dadurch gekennzeichnet, dass** die Brückenschaltung des DC/AC-Wandlers (2) als einphasige Halbbrücke mit zwei parallel zum Zwischenkreiskondensator (C_{Z}) in Reihe liegenden Transistoren (T1, T2) ausgebildet ist.

6. Vorrichtung nach Anspruch 1, **dadurch gekennzeichnet, dass** die Brückenschaltung des DC/AC-Wandlers (2) mehrphasig ausgebildet ist, wobei jede Phase als Halbbrücke aus zwei in Reihe liegenden Transistoren (T1-T2, T3-T4) besteht, die parallel zum Zwischenkreiskondensator (C_{Z}) angeordnet ist.

7. Vorrichtung nach Anspruch 1, **dadurch gekennzeichnet, dass** der Energiespeicher (DLC) ein Doppelschichtkondensator ist.

8. Vorrichtung nach Anspruch 1, **dadurch gekennzeichnet, dass** der Energiespeicher (DLC) aus einer Reihenschaltung von Akkumulatoren besteht.

9. Vorrichtung nach Anspruch 5 oder 6, **dadurch gekennzeichnet, dass** die Brückenschaltung des DC/AC-wandlers (2) selbstgetaktet ist.

10. Vorrichtung nach Anspruch 1, **dadurch gekennzeichnet, dass** Energiespeicher (DLC), Gleichrichter (3), Koppelkondensatoren (CK1 bis CKn, CK1a bis CKnb) und AC-Bus (4, 4.1, 4.2) in einem gemeinsamen Gehäuse integriert sind.

11. Verfahren zum Betreiben der Vorrichtung nach Anspruch 1,
**dadurch gekennzeichnet,**
**dass** der vom Energiespeicher (DLC) oder der weiteren Energiequelle (B) gespeiste DC/DC-wandler (1) dem Zwischenkreiskondensator (C_{Z}) einen Strom zuführt, wodurch sich an diesem eine Spannung (U_{CZ}) zum Laden der Zellen (Z₁ bis Zₙ) selbständig einstellt, und
**dass** der DC/AC-Wandler (2) diese Spannung (U_{CZ}) wechselrichtet und über den oder die AC-Busse (4, 4.1, 4.2), die zugeordneten Koppelkondensatoren (C_{K1} bis C_{Kn}, C_{K1a} bis C_{Knd}) und Dioden (D₁ₐ bis D_{nd}) des Gleichrichters (3) der Zelle (Zₓ) mit der geringsten Zellenspannung (U_{Zx}) einen gleichgerichteten, pulsierenden Ladestrom zuführt.

12. Verfahren nach Anspruch 11, **dadurch gekennzeichnet, dass** bei einem einphasigen DC/AC-Wandler (2) der Ladestrom für die Zelle (Zₓ, x = 1 bis n) mit der geringsten Zellenspannung (U_{Zx}) in der positiven Phase vom Zwischenkreiskondensator (C_{Z}) über den stromleitenden ersten Transistor (T1), den AC-Bus (4), den Koppelkondensator (C_{Kx}), die Diode (Dₓₐ) zur Zelle (Zₓ) und von dort über alle Zellen (Zₓ₊₁ bis Zₙ), deren positiver Anschluss ein gegen Bezugspotential (GND) geringeres Potential als der positive Anschluss der zu ladenden Zelle (Zₓ) aufweisen, und über Bezugspotential (GND) zurück zum Zwischenkreiskondensator (C_{Z}) fließt, und
in der folgenden negativen Phase in umgekehrter Richtung vom nun stromleitenden zweiten Transistor (T2) durch die Zellen (Zₙ bis Zₓ₊₁), deren positiver Anschluss ein gegen Bezugspotential (GND) geringeres Potential als der positive Anschluss der zu ladenden Zelle (Zₓ) aufweisen, die Diode (D_{xb}), den Koppelkondensator (C_{Kx}) und den AC-Bus (4) zurück zum zweiten Transistor (T2) fließt.

13. Verfahren nach Anspruch 11, **dadurch gekennzeichnet, dass** bei einem mehrphasigen DC/AC-Wandler (2) der Ladestrom für die Zelle (Zₓ, mit x = 1 bis n) mit der geringsten Zellenspannung (U_{Zx}) in der ersten Phase vom Zwischenkreiskondensator (C_{Z}) über den ersten Transistor (T1), den ersten AC-Bus (4.1), Koppelkondensator (C_{Kxa}) und Diode (Dₓₐ), durch die Zelle (Zₓ) und zurück über Diode (D_{xd}), Koppelkondensator (C_{Kxb}), den zweiten AC-Bus (4.2) und den vierten Transistor (T4) zum Zwischenkreiskondensator (C_{Z}) fließt, und
in der zweiten Phase vom Zwischenkreiskondensator (C_{Z}) über den dritten Transistor (T3), den AC-Bus (4.2), Koppelkondensator (C_{Kxb}) und Diode (D_{xc}), durch die Zelle (Zₓ) und zurück über Diode (D_{xb}), Koppelkondensator (C_{Kxa}), den AC-Bus (4.1) und den zweiten Transistor (T2) zum Zwischenkreiskondensator (C_{Z}) fließt.

## Claims

1. Device for equalising the charges of individual cells (Z₁ to Zₙ) of an energy store (DLC) connected in series,
**characterised in that**
a DC/DC converter (1) is provided, which is connected by way of a first switch (S1) to the one terminal of the energy store (DLC),
a DC/AC converter (2) connected downstream of the DC/DC converter (1) is provided, containing an intermediate circuit capacitor (C_{Z}) and a bridge circuit (T1 to T4),
at least one AC bus (4, 4.1, 4.2) connected downstream of the DC/AC converter (2) is provided and
a series circuit of at least one coupling capacitor (C_{K1} to C_{Kn}, C_{K1a} and C_{K1b} to C_{Kna} and C_{Knb}) and a rectifier (3) is disposed between each cell (Z₁ to Zₙ) and each AC bus (4, 4.1, 4.2).

2. Device according to claim 1, **characterised in that** the rectifier (3) is configured such that a diode (Dₓₐ, D_{xc}) conducts current from the terminal of the coupling capacitor (C_{Kx}, C_{Kxa}, C_{Kxb}, where x = 1 to n) facing away from the AC bus (4, 4.1, 4.2) to the positive terminal of the assigned cell (Zₓ) and the other diode (D_{xb}, D_{xd}) conducts current from the negative terminal of the cell (Zₓ) to the terminal of the assigned coupling capacitor (C_{Kx}, C_{Kxa}, C_{Kxb}) facing away from the AC bus (4, 4.1, 4.2).

3. Device according to claim 1, **characterised in that** the DC/DC converter (1) can be connected by way of a second switch (S2) to a further energy source (B).

4. Device according to claim 1, **characterised in that** the DC/DC converter (1) is a current-regulated step-down converter.

5. Device according to claim 1, **characterised in that** the bridge circuit of the DC/AC converter (2) is configured as a single-phase half-bridge with two transistors (T1, T2) disposed in series parallel to the intermediate circuit capacitor (C_{Z}).

6. Device according to claim 1, **characterised in that** the bridge circuit of the DC/AC converter (2) is configured as multi-phase, each phase being a half-bridge comprising two transistors (T1-T2, T3-T4) arranged in series, disposed in parallel to the intermediate circuit capacitor (C_{Z}).

7. Device according to claim 1, **characterised in that** the energy store (DLC) is a double-layer capacitor.

8. Device according to claim 1, **characterised in that** the energy store (DLC) comprises a series circuit of batteries.

9. Device according to claim 5 or 6, **characterised in that** the bridge circuit of the DC/AC converter (2) is self-clocking.

10. Device according to claim 1, **characterised in that** the energy store (DLC), rectifier (3), coupling capacitors (CK1 to CKn, CK1a to CKnb) and AC bus (4, 4.1, 4.2) are integrated in a common housing.

11. Method for operating the device according to claim 1,
**characterised in that**
the DC/DC converter (1) supplied by the energy store (DLC) or the further energy source (B) feeds a current to the intermediate circuit capacitor (C_{Z}), as a result of which a voltage (U_{CZ}) to charge the cells (Z₁ to Zₙ) results at said intermediate circuit capacitor (C_{Z}), and
the DC/AC converter (2) inverts this voltage (U_{CZ}) and feeds a rectified pulsing charging current by way of the AC buses (4, 4.1, 4.2), the assigned coupling capacitors (C_{K1} to C_{Kn}, C_{K1a} to C_{Knd}) and diodes (D₁ₐ to D_{nd}) of the rectifier (3) to the cell (Zₓ) with the smallest cell voltage (U_{Zx}).

12. Method according to claim 11, **characterised in that** in the case of a single-phase DC/AC converter (2) the charging current for the cell (Zₓ, x = 1 to n) with the smallest cell voltage (U_{Zx}) flows in the positive phase from the intermediate circuit capacitor (C_{Z}) by way of the current-conducting first transistor (T1), the AC bus (4), the coupling capacitor (C_{Kx}), the diode (Dₓₐ) to the cell (Zₓ) and from there by way of all cells (Zₓ₊₁ to Zₙ), whose positive terminal has a smaller potential to reference potential (GND) than the positive terminal of the cell (Zₓ) to be charged, and by way of reference potential (GND) back to the intermediate circuit capacitor (C_{Z}), and
in the next negative phase flows in the reverse direction from the now current-conducting second transistor (T2) through the cells (Zₙ to Zₓ₊₁), whose positive terminal has a smaller potential to reference potential (GND) than the positive terminal of the cell (Zₓ) to be charged, the diode (D_{xb}), the coupling capacitor (C_{Kx}) and the AC bus (4) back to the second transistor (T2).

13. Method according to claim 11, **characterised in that** in the case of a multi-phase DC/AC converter (2) the charging current for the cell (Zₓ, where x = 1 to n) with the smallest cell voltage (U_{Zx}) flows in the first phase from the intermediate circuit capacitor (C_{Z}) by way of the first transistor (T1), the first AC bus (4.1), coupling capacitor (C_{Kxa}) and diode (Dₓₐ), through the cell (Zₓ) and back by way of diode (D_{xd}), coupling capacitor (C_{Kxb}), the second AC bus (4.2) and the fourth transistor (T4) to the intermediate circuit capacitor (C_{Z}), and
in the second phase flows from the intermediate circuit capacitor (C_{Z}) by way of the third transistor (T3), the AC bus (4.2), coupling capacitor (C_{Kxb}) and diode (D_{xc}), through the cell (Zₓ) and back by way of diode (D_{xb}), coupling capacitor (C_{Kxa}), the AC bus (4.1) and the second transistor (T2) to the intermediate circuit capacitor (C_{Z}).

## Revendications

1. Dispositif pour l'équilibrage de la charge des cellules élémentaires (Z₁ à Zₙ) d'un accumulateur d'énergie (DLC) disposées en série,
**caractérisé**
**en ce qu'**il est prévu un convertisseur continu-continu (1) qui est relié par l'intermédiaire d'un premier interrupteur (S1) à l'une des connexions de l'accumulateur d'énergie (DLC),
**en ce qu'**il est prévu un convertisseur continu-alternatif (2) connecté en aval du convertisseur continu-continu (1) et qui comporte un condensateur de circuit intermédiaire (C₂) et un circuit en pont (T1 à T4),
**en ce qu'**il est prévu au moins un bus à courant alternatif (4, 4.1, 4.2) connecté en aval du convertisseur continu-alternatif (2), et
**en ce que**, entre chaque cellule (Z₁ à Zₙ) et chaque bus à courant alternatif (4, 4.1, 4.2), est disposé un circuit série d'au moins un condensateur de couplage (C_{K1} à C_{Kn}, C_{K1a} et C_{K1b} à C_{Kna} et C_{Knb}) et d'un redresseur (3).

2. Dispositif selon la revendication 1, **caractérisé en ce que** le redresseur (3) est constitué de manière qu'une diode (Dₓₐ, D_{xc}) soit conductrice dans le sens allant de la connexion du condensateur de couplage (C_{Kx}, C_{Kxa}, C_{Kxb}, où x = 1 à n) qui est éloignée du bus à courant alternatif (4, 4.1, 4.2) vers la connexion positive de la cellule correspondante (Zₓ), et que l'autre diode (D_{xb}, D_{xd}) soit conductrice dans le sens allant de la connexion négative de la cellule (Zₓ) à la connexion du condensateur de couplage correspondant (C_{Kx}, C_{Kxa}, C_{Kxb}) qui est éloignée du bus à courant alternatif (4, 4.1, 4.2).

3. Dispositif selon la revendication 1, **caractérisé en ce que** le convertisseur continu-continu (1) peut être relié à une autre source d'énergie (B) par l'intermédiaire d'un deuxième interrupteur (S2).

4. Dispositif selon la revendication 1, **caractérisé en ce que** le convertisseur continu-continu est un organe abaisseur réglé par un courant.

5. Dispositif selon la revendication 1, **caractérisé en ce que** le circuit en pont du convertisseur continu-alternatif (2) est constitué par un demi-pont monophasé comprenant deux transistors (T1, T2) en série situés en parallèle avec le condensateur de circuit intermédiaire (C_{Z}).

6. Dispositif selon la revendication 1, **caractérisé en ce que** le circuit en pont du convertisseur continu-alternatif (2) est polyphasé, chaque phase étant constituée par un demi-pont composé de deux transistors (T1-T2, T3-T4) en série et disposé en parallèle avec le condensateur de circuit intermédiaire (C_{Z}).

7. Dispositif selon la revendication 1, **caractérisé en ce que** l'accumulateur d'énergie (DLC) est un condensateur à double couche.

8. Dispositif selon la revendication 1, **caractérisé en ce que** l'accumulateur d'énergie (DLC) est constitué par un groupement d'accumulateurs en série.

9. Dispositif selon la revendication 5 ou 6, **caractérisé en ce que** le circuit en pont du convertisseur continu-alternatif (2) est auto-cadencé.

10. Dispositif selon la revendication 1, **caractérisé en ce que** l'accumulateur d'énergie (DLC), le redresseur (3), les condensateurs de couplage (CK1 à CKn, CK1a à CKnb) et le bus à courant alternatif (4, 4.1, 4.2) sont intégrés dans un boîtier commun.

11. Procédé pour faire fonctionner le dispositif selon la revendication 1, **caractérisé**
**en ce que** le convertisseur continu-continu (1) alimenté par l'accumulateur d'énergie (DLC) ou par l'autre source d'énergie (B) envoie un courant au condensateur de circuit intermédiaire (C_{Z}), avec pour effet que, sur ce dernier, il s'établit automatiquement une tension (U_{CZ}) pour charger les cellules (Z₁ à Zₙ), et
le convertisseur continu-alternatif (2) ondule cette tension (U_{CZ}) et, en passant par le ou les bus à courant alternatif (4, 4.1, 4.2), les condensateurs de couplage correspondants (C_{K1} à C_{Kn}, C_{K1a} à C_{Knd}) et les diodes (D₁ₐ à D_{nd}) du redresseur (3), il envoie à la cellule (Zₓ) possédant la plus petite tension de cellule (U_{Zx}) un courant de charge redressé, pulsatoire.

12. Procédé selon la revendication 11, **caractérisé en ce que,** dans le cas d'un convertisseur continu-alternatif monophasé (2), dans la phase positive, le courant de charge pour la cellule (Zₓ, x = 1 à n) qui présente la plus petite tension de cellule (U_{Zx}) s'écoule, en partant du condensateur de circuit intermédiaire (C_{Z}), et en passant par le premier transistor conducteur (T1), le bus à courant alternatif (4), le condensateur de couplage (C_{Kx}), la diode (Dₓₐ), jusqu'à la cellule (Zₓ) et, de là, en passant à travers toutes les cellules (2ₓ₊₁ à Zₙ) dont la connexion positive présente un plus petit potentiel par rapport au potentiel de référence (GND) que la connexion positive de la cellule à charger (Zₓ) et à travers le potentiel de référence (GND), il revient au condensateur de circuit intermédiaire (C_{Z}) et,
dans la phase négative qui y fait suite, en partant du deuxième transistor (T2) qui est maintenant conducteur, et en traversant les cellules (Zₙ à Zₓ₊₁) dont la connexion positive présente un plus petit potentiel, par rapport au potentiel de référence (GND), que la connexion positive de la cellule (Zₓ) à charger, la diode (D_{xb}), le condensateur de couplage (C_{Kx}) et le bus à courant alternatif (4), il s'écoule en sens inverse et revient au deuxième transistor (T2).

13. Procédé selon la revendication 11, **caractérisé en ce que,** dans le cas d'un convertisseur continu-alternatif polyphasé (2), dans la première phase, le courant de charge pour la cellule (Zₓ, avec x = 1 à n) qui présente la plus petite tension de cellule (U_{Zx}) s'écoule, en partant du condensateur de circuit intermédiaire (C_{Z}) et en passant par le premier transistor (T1), le premier bus à courant alternatif (4.1), le condensateur de couplage (C_{Kxa}) et la diode (Dₓₐ), à travers la cellule (Zₓ), et, en passant par la diode (D_{xd}), le condensateur de couplage (C_{Kxb}) le deuxième bus à courant alternatif (4 . 2) et le quatrième transistor (T4), il revient au condensateur de circuit intermédiaire (C_{Z}) et,
dans la deuxième phase, en partant du condensateur de circuit intermédiaire (C_{Z}) et en passant par le troisième transistor (T3), le bus à courant alternatif (4.2), le condensateur de couplage (C_{Kxa}) et la diode (D_{xc}), il s'écoule à travers la cellule (Zₓ) et, en passant par la diode (D_{xb}), le condensateur de couplage (C_{Kxa}), le bus à courant alternatif (4.1) et le deuxième transistor (T2), il revient au condensateur de circuit intermédiaire (C_{Z}).
